# EUROPEAN PATENT SPECIFICATION

(11) **EP 4 567 411 B1**
(45) Date of publication and mention of the grant of the patent: **18.02.2026**
(21) Application number: 24306933.3
(22) Date of filing: 19.11.2024
(51) Int. Cl.: G01N 21/952, G01B 11/30, G01N 21/57, H02G 1/14

(54) **METHOD FOR CONTROLLING THE QUALITY OF A TRANSITION SURFACE OF A HIGH VOLTAGE ELECTRIC COMPONENT FOR A TRANSITION**
VERFAHREN ZUR QUALITÄTSKONTROLLE EINER ÜBERGANGSFLÄCHE EINES ELEKTRISCHEN HOCHSPANNUNGSBAUTEILS FÜR EINEN ÜBERGANG
PROCÉDÉ DE CONTRÔLE DE LA QUALITÉ D'UNE SURFACE DE TRANSITION D'UN COMPOSANT ÉLECTRIQUE HAUTE TENSION POUR UNE TRANSITION

(30) Priority: 04.12.2023 NO 20231312
(43) Date of publication of application: 11.06.2025
(73) Proprietor: Nexans, 92400 Courbevoie (FR)
(72) Inventor: DOEDENS, Espen, 92400 COURBEVOIE (FR); FRISK, Nils-Bertil, 92400 COURBEVOIE (FR); PETTERSEN, Heine, 92400 COURBEVOIE (FR)
(74) Representative: Acapo Onsagers AS

(56) References cited:
- EP-A1- 3 901 571
- EP-A1- 4 175 085
- DE-A1- 102015 219 978
- US-B1- 6 542 248
- LEOPOLD J ET AL: "SCHNELLE BEWERTUNG GLAENZENER OBERFLAECHEN MIT KOHAERENTEM LICHT", TM - TECHNISCHES MESSEN/PLATTFORM F?R METHODEN, SYSTEME UND ANWENDUNGEN DER MESSTECHNIK, R.OLDENBOURG VERLAG. MUNCHEN, DE, vol. 65, no. 7/08, 1 July 1998 (1998-07-01), pages 288 - 292, XP000847216, ISSN: 0171-8096

## Description

### Field of the invention

The present invention relates to a method and a system for controlling the quality of a transition surface of a high voltage electric component for a transition, to a method of jointing a high voltage cable end and a transition element, and to the use of a gloss measuring device for controlling the quality of a transition surface of a high voltage electric component.

### Background

High voltage (HV) cables for the transmission of electrical power usually comprise a conductor as a core element, which is surrounded by an inner semiconducting layer. The conductor may be stranded and thus may comprise a corrugated or wavy peripheral surface. The inner semiconducting layer assists in providing a harmonic and even electrical field around the conductor. Local air pockets between the conductor and the insulating layer can be prevented and local electric discharges are avoided. The semiconducting layer is surrounded by an insulating layer, which usually comprises a polymer material. An outer semiconducting layer may be bonded to an outer surface of the insulating layer. It is often covered by tapes, a metallic screen and a polymer outer sheath.

The outer layers that surround the insulating layer are removed from an end of the HV cable by cutting, peeling, sanding or other processes, to prepare the cable end for accessory installations, such as cable joints and terminations. Before placing the desired cable accessory onto the HV cable end, the surface quality of the insulating layer is inspected to make sure there are no surface irregularities. As the surface of the insulating in the transition to the cable accessory is subjected to tangential and radial electrical fields, this is crucial for avoiding local electric discharges and preventing a failure due to a dielectric breakdown.

Usually, HV cable joints and terminations are made on-site. The surface inspection may be carried out with human eye by an operator, which leaves a certain risk that surface defects Or regions with different surface textures due to faulty procedures or worn out tools may be missed. Besides that, human eye inspection provides limited data for future quality revisions and fault findings.

A more accurate surface inspection may be achieved by determining the roughness of the surface of the HV cable end by using suitable measuring devices. For example, optical profilometers deliver precise measurements of microstructure of the surface. While semi-portable optical profilometers are available, they require a long setup time, expertise, and are not perfectly suited for on-site use. Destructive sampling on-site and subsequent measurement in the lab by optical profilometers may also be a viable option, but the quality assessment process is cumbersome and, due to the use of an external lab, slow.

Another process for inspecting a surface structure utilizes a contact tape measurement. Here, a foam tape segment is compressed over the surface to be inspected and deforms complementary to the surface. The deformed tape thus forms a replica of the surface texture. A handheld device may be used to scan the deformed tape surface for deducing the surface roughness in 2D or 3D. However, this process is hardly suitable for surfaces with a low roughness and may thus not be applicable for the inspecting HV cable end surfaces.

A portable stylus profilometry may be considered a still further method for analyzing a surface texture. It drags a needle tip, i.e. the stylus, across the surface and deduces the surface profile in 2D. However, it leaves a scratch on the inspected surface.

EP 4 175 085 A1 discloses a method for preparing a cable end of a cable for transition, the method comprising the steps of removing an outer semiconducting layer and optionally part of an insulating layer, from an end section of the cable, providing an uncovered insulating layer surface on the end section of the cable; and measuring the surface roughness of the obtained uncovered insulating layer surface by optical profilometry and deriving a measured value of a roughness parameter for the uncovered insulating layer surface. The measured value may be compared with a preselected reference value of the same roughness parameter to determine, whether the surface quality is acceptable or not.

Other prior-art documents are the EP 390 157 A1 disclosing a system and method for assessing the surface quality of high-voltage cable ends, and the DE 10 2015 219 978 A1 disclosing a device and method for inspecting the surface of an electrical conductor, particularly after shield removal, to detect protruding strands.

An object of the invention is to propose an alternative method for controlling the quality of a transition surface of a high voltage electric component, such as a cable end of a high voltage cable, for a transition, wherein the method shall be particularly applicable for a quick, yet reliable and precise on-site measurement.

### Summary of the invention

The present invention is defined by the appended independent claims.

In a first aspect, the invention relates to a method for controlling the quality of a transition surface of a high voltage electric component for a transition, the method comprising the steps of providing a high voltage electric component having a transition surface, arranging a gloss measuring device on at least one section of the transition surface, measuring a gloss level of the at least one section of the transition surface through operating the gloss measuring device, comparing the measured gloss level with at least one predetermined reference gloss level to determine a surface quality of the at least one section of the transition surface, and outputting a signal depending on the determined quality.

The term "high voltage electric component" may refer to any component that is exposable to a high electrical voltage, which may be applied with alternating current (HVAC) or direct current (HVDC). The component may include an HV cable, a gas-insulated switchgear (GIS), an HV joint and other HV cable accessories.

The transition surface is to be understood as an outer surface of an insulating layer in a transition region. It may particularly refer to prepared cable end surfaces in joints and terminations, rubber accessory surfaces, internal and external surfaces, internal surfaces of a GIS system, internal surfaces in cable terminations, external surfaces of outdoor terminations, and other surfaces in a HV cable system subjected to electric field strength.

Furthermore, the term transition as used herein refers to a transition of a material of a high voltage electric component to a material from another high voltage electric component. It may particularly refer to a transition from a surface, i.e. the transition surface, of an insulating material of the high voltage electric component to a surface of another element.

Prior to creating the respective transition, the transition surface is to be checked for irregularities that may induce local electric discharges causing a voltage breakdown. As explained in the background above, a rough insulating layer surface has been proven to be detrimental for the electrical performance of the electric component. Thus, the transition surface should have a minimum surface quality.

According to the invention, a quality check is done by using a gloss measuring device being arranged on at least one section of the transition surface. Gloss is an optical characteristic that denotes the degree of reflectivity of a surface in a specular direction. The factors influencing gloss include the material's refractive index, the angle of incident light, and the surface topography.

Surprisingly, experiments have shown that a sufficiently precise distinction between transition surfaces having an acceptable surface quality and having an inacceptable surface quality can be made by using gloss level measurements. Measuring the gloss on the surfaces of different pieces of the same material allows a comparison of their surface topographies, which is a determining factor for the surface quality.

The gloss measuring device is configured to measure the gloss of the respective section of the transition surface. This may be done by directing a light beam onto the respective section of the transition surface at a certain angle and measuring the specular reflection. Surfaces with a very smooth surface structure, for example, highly polished surfaces, reflect more light and in a more directed manner than surfaces with a less smooth structure, e.g. having a higher roughness. In the context of transition surfaces, which should have a smooth surface topography rather than a rough surface topography, higher gloss values may correspond to higher surface qualities and lower gloss values may correspond to lower surface qualities.

A reference gloss level may correspond to a minimum gloss level, which corresponds to a minimum surface quality or a minimum requirement for the high voltage properties of the insulating material. The reference gloss level may be determined by correlating measured gloss levels with experimentally proven high voltage properties of the insulating material and/or by correlating measured gloss levels with surface structure parameters, such as roughness.

The reference gloss level allows conclusions to be drawn about the surface topography, surface quality and/or high voltage properties by comparison with a known reference gloss value for the same insulating material. Comparing the measured gloss level with the at least one predetermined gloss level allows to determine, whether the surface quality of the respective section meets a required surface quality or not.

Outputting a signal depending on the determined quality may be done in a plurality of different ways. The signal may be an optical signal, an acoustic signal, a haptic signal, and/or a signal that can be electronically transferred from the gloss measuring device to another device, as will be explained further below. In a simple case, the gloss measuring device may simply output a number representing a gloss level on a display.

The gloss measuring device and/or a device connected to it may be able to conduct the comparing step. As a result of this may either be a "pass" notification (required surface quality met) or a "fail" notification (required surface quality not met).

The gloss measuring device may be portable and can easily be employed by a user. As stated further below, a plurality of sections of the transition surface may be inspected to obtain a statement about the entire transition surface. By using the gloss measuring device, the quality control for transition surfaces can be clearly accelerated and simplified, while reliably producing precise results. An external laboratory, sampling of material or other cumbersome analysing processes are not needed. To assess whether the quality of the transition surface is sufficient, the measured gloss level needs to be compared with a predetermined reference gloss level, which in turn may be found in experiments or reference gloss measurements before, as explained further below.

The method may comprise predetermining the at least one reference gloss level as a preparatory step. The reference gloss level may correspond to a surface quality and/or high voltage insulating properties that are just about acceptable. For finding the respective reference gloss level, gloss level measurements may be conducted on a sample piece of insulating material. If the sample piece has a surface quality and/or high voltage insulating properties that are just about acceptable, a resulting measured gloss level can be considered the reference gloss level.

The step of predetermining may comprise the steps of measuring a gloss level of at least one testing surface having known high voltage electrical transition characteristics, and correlating the measured gloss level of the at least one testing surface with the associated high voltage electrical transition characteristics of the at least one testing surface to determine the reference gloss level. The high voltage electrical transition characteristics may be determined through partial discharge tests of the transition region of the respective electric component. These tests are used to prove that even if a partial discharge occurs, it still safely falls below a limit value above the highest operating voltage that occurs. This may include determining a partial discharge breakdown voltage, which must be above a limit value that has been defined for the specific application as part of an insulating coordination. The partial discharge test may be done according to various standards that exist in this field, for example of the International Electrotechnical Commission, such as IEC 60270. Gloss level measurements may be done on the at least one testing surface before and/or after conducting the partial discharge tests. The results of both measurements may be correlated to identify a reference gloss level. In this case, the reference gloss level may correspond to a lowest acceptable partial discharge breakdown voltage for the specific application.

The step of predetermining may comprise the steps of measuring a gloss level of at least one testing surface having a certain surface roughness, and correlating the measured gloss level of the at least one testing surface with the associated surface roughness of the at least one testing surface to determine the reference gloss level in the form of a gloss level that corresponds to a maximum tolerable surface roughness for a desired transition of the electric component to another element. Different roughness values may thus lead to several different gloss levels. The reference gloss level may refer to a roughness value, i.e. a maximum surface roughness, that is just about acceptable.

A maximum surface roughness may be predetermined with a roughness parameter Sa and/or Sdq. The skilled person will understand that a roughness defining parameter is any mathematical algorithm or equation that derives from the measured surface coordinates, yielding a scalar value or curve that can be used in a comparison against a reference value as an acceptance criteria. For example, amplitude parameters such as Sa, Sq, Ssk, Sku, Sp, Sv, Sz, hybrid parameters such as Sdq, Sdr, Sds, Ssc, other parameters listed in ISO 25178-2, Abott-Firestone curves, histograms, calculation of Field Enhancement Factors. When referring to Sa and Sdq as specific example of parameters to qualify the surface roughness, any data derived from the surface height distribution may be used for a surface quality identification for determining, whether the transition surface passes a quality check or fails it.

Providing the high voltage electric component may comprise providing a high voltage cable end and removing a semiconducting layer and/or a part of an insulating layer of the high voltage cable end to form a cable end surface as the transition surface. The high voltage cable may comprise a conductor, an inner semiconducting layer surrounding the conductor, an insulating layer, an outer semiconducting layer and a sheath. The cable may have further layers. The transition surface is uncovered by removing the layers that surround the insulating layer using a cutting tool, a shaving tool, or the like.

The gloss measuring device may be a portable gloss measuring device. Handheld and self-contained gloss measuring devices are available, which offer precise gloss measurements. Usually, they have a display that shows measured gloss values. Often, they may be adjusted in their mode of operation, in particular specular gloss measuring devices, which allow to select between different measurement angles.

The step of measuring the gloss level of the at least one section of the transition surface may be conducted in situ. The method according to the invention allows to reliably provide a precise inspection of a transition surface directly on site, after a reference gloss value has been determined. This clearly increases the speed of the inspection and also leads to significant reduction of costs in labour.

The step of arranging the gloss measuring device may comprise consecutively placing the gloss measuring device on a plurality of sections of the transition surface, and the step of measuring the gloss level may comprise measuring the gloss levels of all sections. Each of the individually measured gloss levels may be compared with the reference gloss level. However, average, median and/or extreme values may be determined from a series of measurements. This may be done automatically in the gloss measuring device, or a device in signal connection with the gloss measuring device, or by the user.

Measuring a gloss level may comprise measuring specular reflection gloss. The gloss measuring device may comprise a light source that projects a parallel beam of light onto the at least one section of the transition surface to be inspected under a certain measurement angle. A filtered detector is provided at an opposite angle to receive the rays reflected from the transition surface. The gloss measuring device may be configured to automatically select a suitable angle for the measurement process. For example, commercially available gloss measuring devices are able to select between measuring angles of 20°, 60° and 85°. If a measured gloss level at one of the higher angles exceeds a certain value, such as 70 GU (gloss units), the measuring device switches to a lower measuring angle to repeat the measurement at the reduced measuring angle. It may, however, be useful to let a user select a suitable measuring angle depending on the material of the transition surface.

Outputting a signal may comprise outputting at least one of an optical signal, an acoustical signal, a haptical signal. The optical signal may be realized by a display, which displays the measured gloss level. If the gloss measuring device is capable of storing the reference gloss level and to compare a measured gloss level with the reference gloss level, the optical signal may also be realized by a light source emitting a green or a red light. If a gloss level is below the reference gloss level, the red light may be emitted. If a gloss level reaches or exceeds the reference gloss level, the green light may be emitted. The acoustic signal may comprise spoken information, notification sounds, or the like. For example, if a gloss level is below the reference gloss level, an error sound may be played back. If a gloss level reaches or exceeds the reference gloss level, a confirmation sound may be played back. Haptical signals may be chosen accordingly.

The method may comprise reworking the transition surface if the surface quality of the at least one section of the transition surface is worse than a required surface quality. This completes the method for controlling the quality of the transition surface, such that it is ready for providing the transition. It is to be understood that after reworking the transition surface, the steps of measuring, comparing, outputting and reworking may be repeated if required until the transition surface has an acceptable surface quality.

The reworking may comprise conducting a material-removing process or a surface-heating process on the transition surface to achieve a desired surface quality. The transition surface may be sanded to reduce the roughness. Applying hot air or treating the transition surface with a gas burner flame that is moved back and forth leads to softening the material, such that outer regions of the surface structure become soft, partially merge and reduce imperfections.

The transition surface may be an uncovered insulating layer surface.

In a second aspect, the invention relates to a system for controlling the quality of a transition surface of a high voltage electric component for a transition is pro, the system comprising a gloss measuring device configured to measure a gloss level of at least one section of the transition surface, and an electronics device couplable with the gloss measuring device, wherein the system is configured to measure a gloss level of at least one section of the transition surface through operating the gloss measuring device when placed on the at least one section, comparing the measured gloss level with at least one predetermined reference gloss level to determine a surface quality of the at least one section of the transition surface, and outputting a signal depending on the determined quality.

The gloss measuring device may comprise the features and characteristics explained above. It may form a separate part from the electronics device, or both may form a combined device. For example, the gloss measuring device may be a gloss measuring module attached to the electronics device. Also, the electronics device may be a module, in particular a software module, integrated into the gloss measuring device.

The system may additionally be configured to assist in predetermining the at least one reference gloss level as a preparatory step, in that it may be configured to measuring a gloss level of at least one testing surface having known high voltage electrical transition characteristics, and correlating the measured gloss level of the at least one testing surface with the associated high voltage electrical transition characteristics of the at least one testing surface to determine the reference gloss level. It may also be configured to measuring a gloss level of at least one testing surface having a certain surface roughness, and correlating the measured gloss level of the at least one testing surface with the associated surface roughness of the at least one testing surface to determine the reference gloss level in the form of a gloss level that corresponds to a maximum tolerable surface roughness for a desired transition of the electric component to another element.

In a third aspect, the invention relates to a method of jointing a high voltage cable end and a transition element, the high voltage cable end having an electric conductor and an insulating system, the method comprising the steps of controlling the quality of a transition surface on the end of the high-voltage cable according to the above, and jointing the cable end and the transition element.

In a fourth aspect, the invention relates to the use of a gloss measuring device for controlling the quality of a transition surface of a high voltage electric component by arranging a gloss measuring device on at least one section of the transition surface, measuring a gloss level of the at least one section of the transition surface through operating the gloss measuring device, and comparing the measured gloss level with at least one predetermined reference gloss level to determine a surface quality of the at least one section of the transition surface.

### Short description of the drawings

In the following description this invention will be further explained by way of exemplary embodiments shown in the drawings:
Fig. 1 shows a high voltage cable in a perspective view.
Fig. 2 shows the high voltage cable with a gloss measuring device in a perspective view.
Figs. 3a and 3b show sections on the insulation layer of the high voltage cable in plan views.
Fig.4 shows a system 25 for determining the surface quality of a transition surface in a schematic view.
Fig. 5 shows a method for controlling the quality of a transition surface in a schematic, block-oriented view.
Fig. 6 shows a method of jointing the ned of a high voltage cable in a schematic, block-oriented view.

### Detailed description of the invention

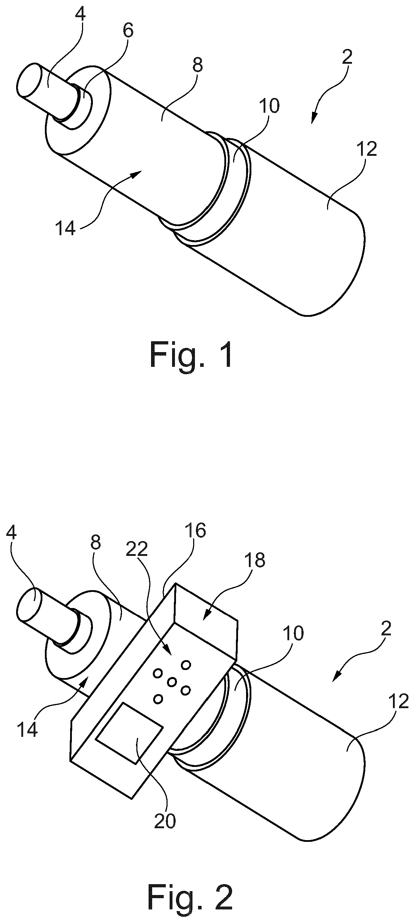

Fig. 1 shows an end of a high voltage cable 2 in a perspective view. The illustration is simplified and the high voltage cable 2 mainly comprises the main layers usually found in this type of cables. The cable 2 may have additional layers, which are not shown herein.

The cable 2 comprises a conductor 4, which may be made of copper, aluminum or other metallic materials. The conductor 4 may be stranded, but is shown as a cylindrical component for simplification of the illustration. The conductor 4 is surrounded by an inner semiconducting layer 6, which assists in harmonizing the electrical field around the conductor 4. The inner semiconducting layer 6 is surrounded by an insulating layer 8, which is usually provided in the form of a polymeric material. The inner semiconducting layer 6 may be bonded to the insulating layer 8 to avoid the creation of voids or other irregularities. The insulating layer 8 is surrounded by an outer semiconducting layer 10, which in turn is covered by a polymeric sheath 12.

In this illustration, the outer sheath 12, and the outer semiconducting layer 10 are partially removed to expose a surface 14 of the insulating layer 8. In the following, this surface 14 is referred to as transition surface 14. Determining a surface quality of the transition surface 14 is detrimental for creating transitions, for example, to cable accessory installation, with a sufficiently high partial discharge breakdown voltage, or other high voltage electrical transition characteristics.

Known methods rely on the human eye, or on surface analyzing processes in external laboratories. According to the invention, on-site measurements are done using a gloss measuring device. Fig. 2 shows the high voltage cable 2 with a gloss measuring device 16 arranged on the transition surface 14.

In this exemplary embodiment, the gloss measuring device 16 is a portable device. It comprises a housing 18, which can be held in one hand of a user. Preferably, it is configured to measuring specular reflection gloss. To be flexibly operable on-site it comprises an internal battery. A display 24 is provided to display measured gloss levels. Input means 22 may be provided to let a user control the operation of the gloss measuring device 16. It is conceivable that the gloss measuring device 16 is configured to store at least a number of measured gloss levels in a memory unit. The stored gloss levels may be transferable or downloadable to a reporting or logging system for documentation purposes.

The illustration in Fig. 2 is not to scale and shall merely indicate that the gloss measuring device 16 can be placed onto an insulating layer 8 to measure its gloss level. The orientation of the gloss measuring device 16 may be orthogonal to what is shown in Fig. 2. It is to be understood that high voltage cables 2 may comprise an outer diameter that is clearly greater than the width of the housing 18.

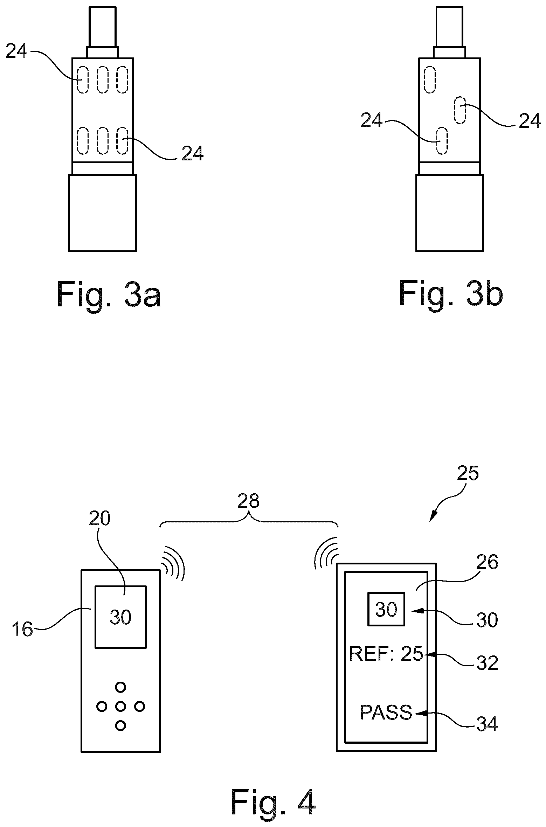

As illustrated in Figs. 3a and 3b, several individual sections 24 of the transition surface 14 may be subjected to a gloss level measurement. The user may place the gloss measuring device 16 on several sections 24 one after the other in an orderly manner (as indicated in Fig. 3a), or place the gloss measuring device 16 on randomly selected sections 24 one after the other (as indicated in Fig. 3b).

It is conceivable that a user reads out measured gloss levels on the display 20 and compare it to a reference gloss level that is predetermined prior to the gloss level measurements. If one of the measured gloss levels does not reach or exceed the reference gloss level, the user may rework at least the respective section 24 to smoothen the transition surface 14.

In Fig. 4, the gloss measuring device 16 is configured to establish a signal connection 28 to an electronics device 26, such as a smartphone, a tablet PC, a mobile PC/laptop, or the like. Both devices 16 and 26 form a system 25 for determining the surface quality of the transition surface 14 of a high voltage electric component 2, such as the HV cable 2. It is conceivable that both devices 16 and 26 may not be separate as shown herein, but constitute parts of a combined device.

The signal connection 28 may be a wireless, such as Bluetooth or Wi-Fi, or a wired connection. The electronics device 26 may be configured to execute a software application that is capable of receiving measured gloss levels from the gloss measuring device 16.

In this illustration, the gloss measuring device 16 has measured a gloss level of 30 gloss units of a section 24 of the transition surface 14. This measured gloss level is transferred to the electronics device 26 via the signal connection 28. Here, it is exemplarily displayed on a display section 30 to the user. The electronics device 26 may have stored a reference gloss level of 25 gloss units. This reference gloss level is displayed on a display section 32 for information purposes.

The software application executed in the electronics device 26 may be configured to automatically compare the measured gloss level with the reference gloss level and output a notification on a display section 34, whether the respective section 24 of the transition surface 14 has the required surface quality. In this example, the measured gloss level 30 exceeds the reference gloss level of 25 and the electronics device 26 thus outputs the notification "PASS". If, however, a measured gloss level does not reach the reference gloss level, the notification "FAIL" may be presented on the display section 34.

Preferably, the electronics device 26 stores the measured gloss level values for documentation purposes. It is conceivable that the software application allows a user to input more details, such as an identifier of the electric component 2, whether a reworking has been conducted after receiving "FAIL" notifications and other details. Also, it may be useful to let the user enter a reference gloss level and/or to choose a reference gloss level from a selection of gloss levels. This may be done directly by selecting the respective gloss value. However, this may also be done indirectly by choosing a certain electrical component, by choosing a certain material of an insulating layer, and optionally by providing additional information about the voltage the electric component would be exposed to. Also, the software application on the electronics device 26 may have access to an internal or external database containing a variety of different reference gloss levels correlated with a variety of types of electric components and voltages, wherein a user may choose from the database directly or by scanning or inputting an identifier of the respective electric component through a barcode scanner or a camera of the electronics device.

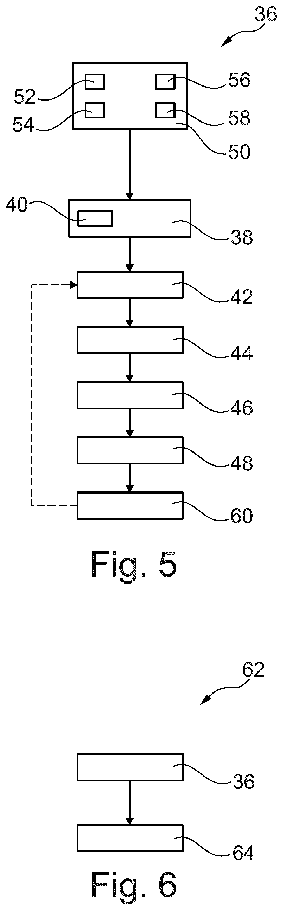

Fig. 5 shows a schematic, block-oriented illustration of a method 36 for controlling the quality of a transition surface 14 of a high voltage electric component 2 for a transition. The method 36 exemplarily comprises providing 38 a high voltage electric component 2 having a transition surface 14. This may, as shown previously, include providing an end of a high voltage cable 2, and removing 40 an outer semiconducting layer 10 and/or a part of an insulating layer 8 to form a cable end surface as the transition surface 14.

The method further comprises arranging 42 a gloss measuring device 16 on a section 24 of the transition surface 14, measuring 44 a gloss level of the section 24 of the transition surface 14 through operating the gloss measuring device 16, comparing 46 the measured gloss level with at least one predetermined reference gloss level to determine a surface quality of the section 24 of the transition surface 14, and outputting 48 a signal depending on the determined quality. This may be done for several sections 24 consecutively.

Prior to measuring 44, the method 36 may comprise predetermining 50 the at least one reference gloss level as a preparatory step. This may comprise measuring 52 a gloss level of at least one testing surface having known high voltage electrical transition characteristics, and correlating 54 the measured gloss level of the at least one testing surface with the associated high voltage electrical transition characteristics of the at least one testing surface. It may, however, also comprise measuring 56 a gloss level of at least one testing surface having a certain surface roughness, and correlating 58 the measured gloss level of the at least one testing surface with the associated surface roughness of the at least one testing surface to determine the reference gloss level in the form of a gloss level that corresponds to a maximum tolerable surface roughness for a desired transition of the electric component 2 to another element.

If it turns out that the surface quality of the section 24 of the transition surface 14 is not as required, the method 36 may comprise reworking 60 of the transition surface 14, for example by conducting a material-removing process or a surface-heating process on the transition surface 14 to achieve a desired surface quality.

Fig. 6 schematically shows a method 62 of jointing the end of a high voltage cable 2 and a transition element 14, the high voltage cable 2 having an electric conductor 4 and an insulating layer 8. The method 62 comprises the steps of controlling the quality of a transition surface on the end of the high voltage cable 2 according to method 36 explained above, and jointing 64 the end of the high voltage cable 2 and the transition element.

### Reference numerals

- 2: high voltage cable
- 4: conductor
- 6: inner semiconducting layer
- 8: insulating layer
- 10: outer semiconducting layer
- 12: polymeric sheath
- 14: transition surface
- 16: gloss measuring device
- 18: housing
- 20: display
- 22: input means
- 24: section
- 25: system
- 26: electronics device
- 28: signal connection
- 30: display section
- 32: display section
- 34: display section
- 36: method of controlling the quality
- 38: providing high voltage component
- 40: removing semiconducting layer and/or a part of an insulating layer
- 42: arranging gloss measuring device
- 44: measuring gloss level
- 46: comparing gloss levels
- 48: outputting signal
- 50: predetermining reference gloss level
- 52: measuring (predetermining reference gloss)
- 54: correlating with transition characteristics (predetermining reference gloss)
- 56: measuring (predetermining reference gloss)
- 58: correlating with roughness (predetermining reference gloss)
- 60: reworking
- 62: method of jointing
- 64: jointing

## Claims

1. A method for controlling the quality of a transition surface (14) of a high voltage electric component (2) for a transition, the method comprising the steps of:
- providing a high voltage electric component (2) having a transition surface (14),
- arranging a gloss measuring device (16) on at least one section (24) of the transition surface (14),
- measuring a gloss level of the at least one section (24) of the transition surface (14) through operating the gloss measuring device (16),
- comparing the measured gloss level with at least one predetermined reference gloss level to determine a surface quality of the at least one section (24) of the transition surface (14), and
- outputting a signal depending on the determined quality.

2. The method according to claim 1, comprising
- predetermining the at least one reference gloss level as a preparatory step.

3. The method according to claim 2,
wherein the step of predetermining comprises the steps of:
- measuring a gloss level of at least one testing surface having known high voltage electrical transition characteristics, and
- correlating the measured gloss level of the at least one testing surface with the associated high voltage electrical transition characteristics of the at least one testing surface to determine the reference gloss level.

4. The method according to claim 2 or 3,
wherein the step of predetermining comprises the steps of:
- measuring a gloss level of at least one testing surface having a certain surface roughness, and
- correlating the measured gloss level of the at least one testing surface with the associated surface roughness of the at least one testing surface to determine the reference gloss level in the form of a gloss level that corresponds to a maximum tolerable surface roughness for a desired transition of the electric component (2) to another element.

5. The method according to any of the preceding claims,
wherein providing the high voltage electric component (2) comprises:
- providing a high voltage cable end, and
- removing a semiconducting layer (10) and/or a part of an insulating layer (8) of the high voltage cable end to form a cable end surface as the transition surface (14).

6. The method according to any of the preceding claims,
wherein the gloss measuring device (16) is a portable gloss measuring device (16).

7. The method according to any of the preceding claims,
wherein step of measuring the gloss level of the at least one section (24) of the transition surface (14) is conducted in situ.

8. The method according to any of the preceding claims,
wherein the step of arranging the gloss measuring device comprises consecutively placing the gloss measuring device on a plurality of sections of the transition surface (14), and
wherein the step of measuring the gloss level comprises measuring the gloss levels of all sections.

9. The method according to any of the preceding claims,
wherein measuring a gloss level comprises measuring specular reflection gloss.

10. The method according to any of the preceding claims,
comprising reworking the transition surface (14) if the surface quality of the at least one section of the transition surface (14) is worse than a required surface quality.

11. The method according to claim 10,
wherein the reworking comprises conducting a material-removing process or a surface-heating process on the transition surface (14) to achieve a desired surface quality.

12. The method according to any of the preceding claims,
wherein the transition surface (14) is an uncovered surface of an insulating layer (8).

13. System (25) for controlling the quality of a transition surface (14) of a high voltage electric component (2) for a transition, the system comprising:
- a gloss measuring device (16) configured to measure a gloss level of at least one section (24) of the transition surface (14), and
- an electronics device (26) couplable with the gloss measuring device (16),
wherein the system (25) is configured to measure a gloss level of at least one section (24) of the transition surface (14) through operating the gloss measuring device (16) when placed on the at least one section (24), comparing the measured gloss level with at least one predetermined reference gloss level to determine a surface quality of the at least one section (24) of the transition surface (14), and outputting a signal depending on the determined quality.

14. A method (62) of jointing the end of a high voltage cable (2) and a transition element, the high voltage cable (2) having an electric conductor (4) and an insulating layer (8), the method comprising the steps of:
- controlling the quality of a transition surface on the end of the high voltage cable (2) according to any of the claims 1 to 12, and
- jointing (64) the end of the high voltage cable (2) and the transition element.

15. Use of a gloss measuring device (16) for controlling the quality of a transition surface (14) of a high voltage electric component (2) by arranging a gloss measuring device (16) on at least one section (24) of the transition surface (14), measuring a gloss level of the at least one section (24) of the transition surface (14) through operating the gloss measuring device (16), and comparing the measured gloss level with at least one predetermined reference gloss level to determine a surface quality of the at least one section (24) of the transition surface (14).

## Patentansprüche

1. Verfahren zum Kontrollieren der Qualität einer Übergangsoberfläche (14) eines Hochspannungselektrikbauteils (2) für einen Übergang, wobei das Verfahren die folgenden Schritte umfasst:
- Bereitstellen eines Hochspannungselektrikbauteils (2) mit einer Übergangsoberfläche (14),
- Anordnen eines Glanzmessgeräts (16) an mindestens einem Abschnitt (24) der Übergangsoberfläche (14),
- Messen eines Glanzgrades des mindestens einen Abschnitts (24) der Übergangsoberfläche (14) durch Betreiben des Glanzmessgeräts (16),
- Vergleichen des gemessenen Glanzgrades mit mindestens einem vorbestimmten Referenzglanzgrad zur Bestimmung einer Oberflächenqualität des mindestens einen Abschnitts (24) der Übergangsoberfläche (14), und
- Ausgeben eines Signals in Abhängigkeit von der bestimmten Qualität.

2. Verfahren nach Anspruch 1, umfassend
- Vorbestimmen des mindestens einen Referenzglanzgrades als vorbereitenden Schritt.

3. Verfahren nach Anspruch 2,
wobei der Schritt des Vorbestimmens die folgenden Schritte umfasst:
- Messen eines Glanzgrades von mindestens einer Prüffläche mit bekannten hochspannungselektrischen Übergangseigenschaften, und
- Korrelieren des gemessenen Glanzgrades der mindestens einen Prüffläche mit den zugehörigen hochspannungselektrischen Übergangseigenschaften der mindestens einen Prüffläche zur Bestimmung des Referenzglanzgrades.

4. Verfahren nach Anspruch 2 oder 3,
wobei der Schritt des Vorbestimmens die folgenden Schritte umfasst:
- Messen eines Glanzgrades von mindestens einer Prüffläche mit einer bestimmten Oberflächenrauheit, und
- Korrelieren des gemessenen Glanzgrades der mindestens einen Prüffläche mit der zugehörigen Oberflächenrauheit der mindestens einen Prüffläche zur Bestimmung des Referenzglanzgrades in Form eines Glanzgrades, der einer maximal zulässigen Oberflächenrauheit für einen gewünschten Übergang des Elektrikbauteils (2) zu einem weiteren Element entspricht.

5. Verfahren nach einem der vorhergehenden Ansprüche,
wobei das Bereitstellen des Hochspannungselektrikbauteils (2) umfasst:
- Bereitstellen eines Hochspannungskabelendes, und
- Entfernen einer halbleitenden Schicht (10) und/oder eines Teils einer Isolierschicht (8) des Hochspannungskabelendes, um eine Kabelendoberfläche als Übergangsoberfläche (14) auszubilden.

6. Verfahren nach einem der vorhergehenden Ansprüche,
wobei das Glanzmessgerät (16) ein tragbares Glanzmessgerät (16) ist.

7. Verfahren nach einem der vorhergehenden Ansprüche,
wobei der Schritt des Messens des Glanzgrades des mindestens einen Abschnitts (24) der Übergangsoberfläche (14) in situ durchgeführt wird.

8. Verfahren nach einem der vorhergehenden Ansprüche,
wobei der Schritt des Anordnens des Glanzmessgeräts das sukzessive Platzieren des Glanzmessgeräts auf einer Mehrzahl von Abschnitten der Übergangsoberfläche (14) umfasst, und
wobei der Schritt des Messens des Glanzgrades das Messen der Glanzgrade aller Abschnitte umfasst.

9. Verfahren nach einem der vorhergehenden Ansprüche,
wobei das Messen eines Glanzgrades das Messen eines spekularen Reflexionsglanzes umfasst.

10. Verfahren nach einem der vorhergehenden Ansprüche,
umfassend ein Nachbearbeiten der Übergangsoberfläche (14), wenn die Oberflächenqualität des mindestens einen Abschnitts der Übergangsoberfläche (14) schlechter ist als eine erforderliche Oberflächenqualität.

11. Verfahren nach Anspruch 10,
wobei das Nachbearbeiten das Durchführen eines materialabtragenden Verfahrens oder eines Oberflächenheizverfahrens an der Übergangsoberfläche (14) umfasst, um eine gewünschte Oberflächenqualität zu erzielen.

12. Verfahren nach einem der vorhergehenden Ansprüche,
wobei die Übergangsoberfläche (14) eine freiliegende Oberfläche einer Isolierschicht (8) ist.

13. System (25) zum Kontrollieren der Qualität einer Übergangsoberfläche (14) eines Hochspannungselektrikbauteils (2) für einen Übergang, wobei das System umfasst:
- ein Glanzmessgerät (16), das dazu ausgebildet ist, einen Glanzgrad von mindestens einem Abschnitt (24) der Übergangsoberfläche (14) zu messen, und
- eine Elektronikeinrichtung (26), die mit dem Glanzmessgerät (16) koppelbar ist,
wobei das System (25) dazu ausgebildet ist, einen Glanzgrad von mindestens einem Abschnitt (24) der Übergangsoberfläche (14) durch Betreiben des Glanzmessgeräts (16) zu messen, wenn dieses auf dem mindestens einen Abschnitt (24) platziert ist, den gemessenen Glanzgrad mit mindestens einem vorbestimmten Referenzglanzgrad zu vergleichen, um eine Oberflächenqualität des mindestens einen Abschnitts (24) der Übergangsoberfläche (14) zu bestimmen, und ein Signal in Abhängigkeit von der bestimmten Qualität auszugeben.

14. Verfahren (62) zum Verbinden des Endes eines Hochspannungskabels (2) und eines Übergangselements, wobei das Hochspannungskabel (2) einen elektrischen Leiter (4) und eine Isolierschicht (8) aufweist, und wobei das Verfahren die folgenden Schritte umfasst:
- Kontrollieren der Qualität einer Übergangsoberfläche am Ende des Hochspannungskabels (2) nach einem der Ansprüche 1 bis 12, und
- Verbinden (64) des Endes des Hochspannungskabels (2) mit dem Übergangselement.

15. Verwendung eines Glanzmessgeräts (16) zum Kontrollieren der Qualität einer Übergangsoberfläche (14) eines Hochspannungselektrikbauteils (2) durch Anordnen eines Glanzmessgeräts (16) an mindestens einem Abschnitt (24) der Übergangsoberfläche (14), Messen eines Glanzgrades des mindestens einen Abschnitts (24) der Übergangsoberfläche (14) durch Betreiben des Glanzmessgeräts (16) und Vergleichen des gemessenen Glanzgrades mit mindestens einem vorbestimmten Referenzglanzgrad zur Bestimmung einer Oberflächenqualität des mindestens einen Abschnitts (24) der Übergangsoberfläche (14).

## Revendications

1. Procédé de contrôle de la qualité d'une surface de transition (14) d'un composant électrique haute tension (2), comprenant les étapes de:
- fournir un composant électrique haute tension (2) doté d'une surface de transition (14) ;
- positionner un dispositif de mesure de brillance (16) sur au moins une section (24) de la surface de transition (14);
- mesurer le niveau de brillance de l'au moins une section (24) de la surface de transition (14) en utilisant le dispositif de mesure de brillance (16),
- comparer le niveau de brillance mesuré avec au moins un niveau de brillance de référence prédéterminé pour déterminer la qualité de surface de l'au moins une section (24) de la surface de transition (14),et
- émettre un signal dépendant de la qualité déterminée.

2. Le procédé selon la revendication 1, comprenant
- prédéterminer l'au moins un niveau de brillance de référence comme étape préparatoire.

3. Le procédé selon la revendication 2,
dans lequel l'étape de prédétermination comprend les étapes suivantes:
- mesurer le niveau de brillance d'au moins une surface d'essai présentant des caractéristiques de transition électrique haute tension connues, et
- corréler le niveau de brillance mesuré de l'au moins une surface d'essai avec les caractéristiques de transition électrique haute tension associées de l'au moins une surface de test pour déterminer le niveau de brillance de référence.

4. Le procédé selon la revendication 2 ou 3,
dans lequel l'étape de prédétermination comprend les étapes suivantes:
- mesurer le niveau de brillance d'au moins une surface d'essai présentant une certaine rugosité de surface, et
- corréler le niveau de brillance mesuré de l'au moins une surface d'essai avec la rugosité de surface associée de l'au moins une surface d'essai afin de déterminer le niveau de brillance de référence sous la forme d'un niveau de brillance correspondant à une rugosité de surface maximale tolérable pour une transition souhaitée du composant électrique (2) vers un autre élément.

5. Le procédé selon l'une quelconque des revendications précédentes,
dans lequel fournir le composant électrique haute tension (2) comprend :
- fournir une extrémité de câble haute tension, et
- retirer une couche semi-conductrice (10) et/ou une partie d'une couche isolante (8) de l'extrémité du câble haute tension pour former une surface d'extrémité de câble servant de surface de transition (14).

6. Le procédé selon l'une quelconque des revendications précédentes,
dans lequel le dispositif de mesure de brillance (16) est un dispositif de mesure de brillance portable (16).

7. Le procédé selon l'une quelconque des revendications précédentes,
dans lequel l'étape de mesure du niveau de brillance de l'au moins une section (24) de la surface de transition (14) est effectuée in situ.

8. Le procédé selon l'une quelconque des revendications précédentes,
dans lequel l'étape de positionnement du dispositif de mesure de brillance consiste à placer successivement le dispositif de mesure de brillance sur une pluralité de sections de la surface de transition (14), et
dans lequel l'étape de mesure du niveau de brillance consiste à mesurer les niveaux de brillance de toutes les sections.

9. Le procédé selon l'une quelconque des revendications précédentes,
dans lequel la mesure du niveau de brillance comprend la mesure de la brillance par réflexion spéculaire.

10. Le procédé selon l'une quelconque des revendications précédentes,
comprenant le retravail de la surface de transition (14) si la qualité de surface d'au moins une section de la surface de transition (14) est inférieure à une qualité de surface requise.

11. Le procédé selon la revendication 10,
dans lequel le retravail comprend la réalisation d'un processus d'enlèvement de matière ou d'un processus de chauffage de surface sur la surface de transition (14) pour obtenir une qualité de surface souhaitée.

12. Le procédé selon l'une quelconque des revendications précédentes,
dans lequel la surface de transition (14) est une surface découverte d'une couche isolante (8).

13. Système (25) pour contrôler la qualité d'une surface de transition (14) d'un composant électrique haute tension (2) pour une transition, le système comprenant:
- un dispositif de mesure de brillance (16) configuré pour mesurer le niveau de brillance d'au moins une section (24) de la surface de transition (14), et
- un dispositif électronique (26) pouvant être couplé au dispositif de mesure de brillance (16).
dans lequel le système (25) est configuré pour mesurer le niveau de brillance d'au moins une section (24) de la surface de transition (14) en utilisant le dispositif de mesure de brillance (16) lorsqu'il est placé sur au moins une section (24), en comparant le niveau de brillance mesuré avec au moins un niveau de brillance de référence prédéterminé pour déterminer la qualité de surface de l'au moins une section (24) de la surface de transition (14), et en émettant un signal en fonction de la qualité déterminée.

14. Procédé (62) de jonction de l'extrémité d'un câble haute tension (2) et d'un élément de transition, le câble haute tension (2) comportant un conducteur électrique (4) et une couche isolante (8), le procédé comprenant les étapes de:
- contrôler la qualité d'une surface de transition à l'extrémité du câble haute tension (2) selon l'une quelconque des revendications 1 à 12, et
- relier (64) l'extrémité du câble haute tension (2) et l'élément de transition.

15. Utilisation d'un dispositif de mesure de brillance (16) pour contrôler la qualité d'une surface de transition (14) d'un composant électrique haute tension (2) en plaçant un dispositif de mesure de brillance (16) sur au moins une section (24) de la surface de transition (14), en mesurant le niveau de brillance de l'au moins une section (24) de la surface de transition (14) en utilisant le dispositif de mesure de brillance (16), et en comparant le niveau de brillance mesuré avec au moins un niveau de brillance de référence prédéterminé pour déterminer la qualité de surface de l'au moins une section (24) de la surface de transition (14).
